# EUROPEAN PATENT APPLICATION

(11) **EP 2 805 609 A2**
(43) Date of publication of application: **26.11.2014**
(21) Application number: 14169267.3
(22) Date of filing: 21.05.2014
(51) Int. Cl.: A01K 1/03

(54) **Animal breeding system and animal breeding method**

(30) Priority: 22.05.2013 JP 2013108263
(71) Applicant: Kabushiki Kaisha Yaskawa Denki, Kitakyushu-shi, Fukuoka 806-0004 (JP)
(72) Inventor: Yoshida, Osamu, Kitakyushu-shi, Fukuoka 806-0004 (JP); Kihara, Eiji, Kitakyushu-shi, Fukuoka 806-0004 (JP); Usui, Takashi, Bunkyo-ku, Tokyo 113-0033 (JP)
(74) Representative: Grünecker, Kinkeldey, Stockmair & Schwanhäusser

(57) **Abstract**

An animal breeding system (1, la) according to an embodiment includes a rack (10), a carrier robot (20), a thermo camera (27), and an instruction unit (81c). The rack (10) contains therein a cage for breeding an animal. The carrier robot (20) includes a hand having a retention mechanism for the cage. The thermo camera (27) is provided near the hand. The instruction unit (81c) instructs the carrier robot (20) to perform an operation of taking the cage in and out from the rack (10) while retaining the cage with the hand to carry the cage between the rack (10) and a certain carrying position and an operation of bringing the thermo camera (27) close to the cage in the rack (10) to cause the thermo camera (27) to capture the inside of the cage.

## Description

### FIELD

The embodiment discussed herein is directed to an animal breeding system and an animal breeding method.

### BACKGROUND

Conventionally, research institutes in food manufacturers, pharmaceutical manufacturers, and universities for example have conducted experiments generally using test animals such as mice and rats.

The test animals are bred by human operation in breeding rooms and other facilities in the research institutes. Japanese Patent Application Laid-open No. H10-191819 discloses a breeding apparatus including a rack capable of containing therein a large number of housing cages (hereinafter, referred to as "cages") for test animals, for example.

However, conventional methods of breeding test animals as described above have been associated with many problems due to the human operation. For example, the research institutes or other facilities described above require a large number of and a variety of test animals in general. Because these animals require great care, there are limitations to responding to them by human operation alone, and costs such as labor costs are likely to be high.

Furthermore, there have been risks that diseases are transmitted from the animals to the humans or from the humans to the animals. Because of the problems described above, there is an increasing demand for automated animal breeding with which breeding of animals can be performed without human operation.

In light of the above-described problems, one aspect of an embodiment aims to provide an animal breeding system with which breeding of animals can be automated.

### SUMMARY

An animal breeding system according to an embodiment includes a rack, a carrier robot, a thermo camera, and an instruction unit. The rack contains therein a cage for breeding an animal. The carrier robot includes a hand having a retention mechanism for the cage. The thermo camera is provided near the hand. The instruction unit instructs the carrier robot to perform an operation of taking the cage in and out from the rack while retaining the cage with the hand to carry the cage between the rack and a certain carrying position and an operation of bringing the thermo camera close to the cage in the rack to cause the thermo camera to capture the inside of the cage.

An animal breeding method according to an embodiment includes carrying a cage for breeding an animal from a rack containing therein the cage to a certain carrying position while retaining the cage with a robot hand provided on a carrier robot, and bringing a camera provided near the robot hand close to the cage in the rack to cause the camera to capture an inside of the cage.

One aspect of the embodiment can automate breeding of animals.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:
FIG. 1 is a perspective schematic diagram illustrating the schematic configuration of an animal breeding system according to a first embodiment;
FIG. 2A is a substantially front view illustrating the configuration of a rack;
FIG. 2B is a perspective schematic diagram illustrating the configuration of a cage;
FIG. 3 is a plane schematic diagram illustrating the configuration of the animal breeding system according to the first embodiment;
FIG. 4 is a block diagram of the animal breeding system according to the first embodiment;
FIGS. 5A and 5B are diagrams (Nos. 1 and 2, respectively) illustrating an example of cage identification information;
FIG. 6A is a plane schematic diagram illustrating the configuration of a carrier robot.
FIG. 6B is a plane schematic diagram illustrating operations performed by the carrier robot;
FIGS. 7A to 7C are schematic diagrams (Nos. 1 to 3, respectively) explaining a series of operations performed by the carrier robot carrying the cage out from the rack;
FIG. 8 is a diagram illustrating circular movement of the carrier robot;
FIG. 9 is a perspective schematic diagram illustrating the configuration of an exchange robot;
FIGS. 10A to 10D are schematic diagrams (Nos. 1 to 4, respectively) illustrating exchange operations performed by the exchange robot;
FIGS. 11A to 11C are schematic diagrams (Nos. 1 to 3, respectively) illustrating delivery operations of articles between the inside and outside of an animal room;
FIGS. 12A and 12B are schematic diagrams (Nos. 1 and 2, respectively) illustrating monitoring operations performed by the carrier robot; and
FIG. 13 is a plane schematic diagram illustrating the configuration of an animal breeding system according to a second embodiment.

### DESCRIPTION OF EMBODIMENTS

Embodiments of an animal breeding system disclosed herein will be described below in detail with reference to the attached drawings. It should be noted that the present invention is not limited by the embodiments described below.

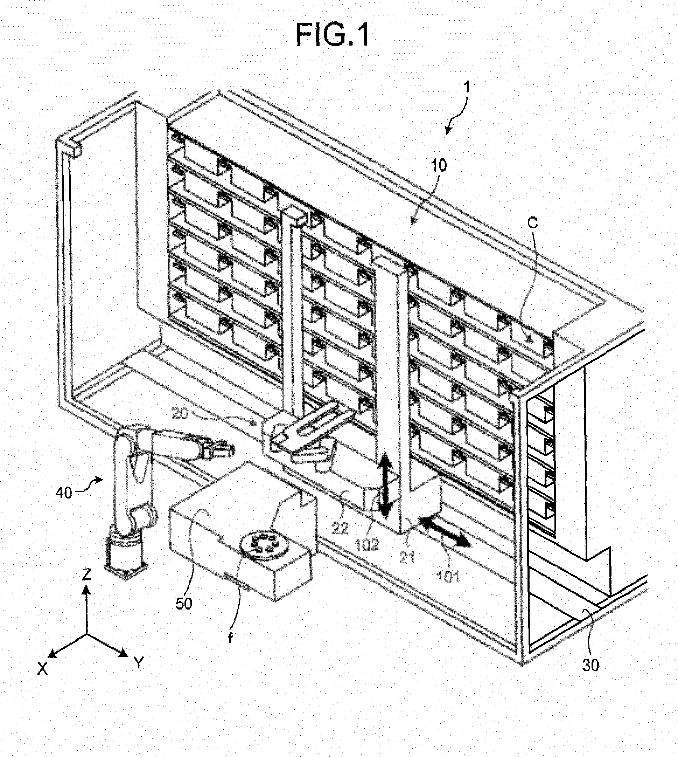

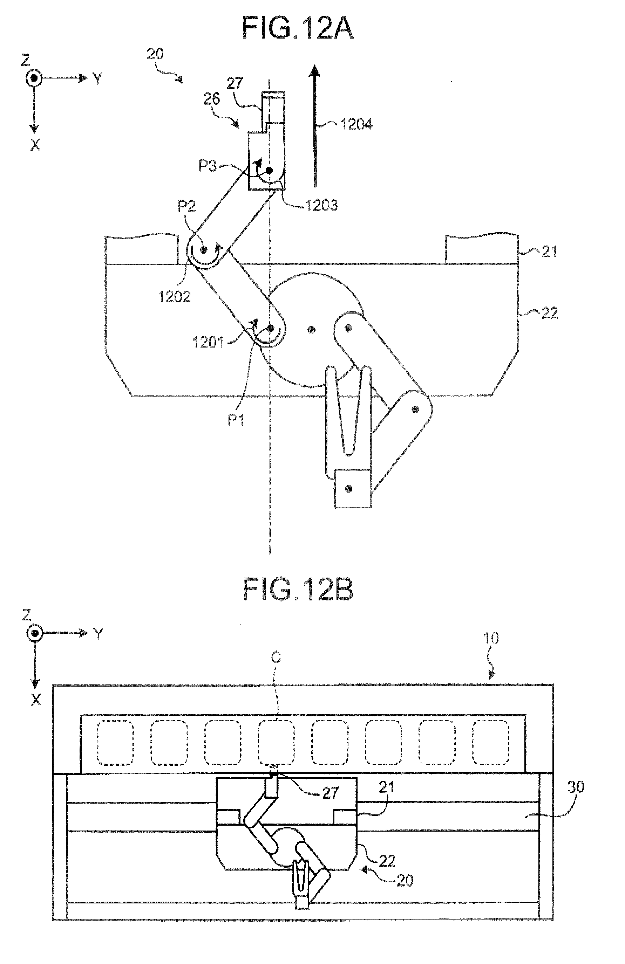

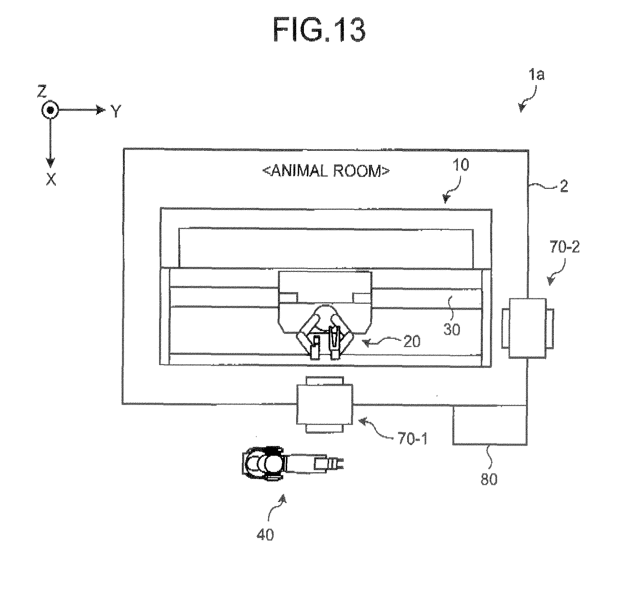

Cited as examples in the description below are cases where mice are used as the bred animals. A "robot hand" which is an end effecter of a robot is referred to as a "hand". A first embodiment is explained in the description with reference to FIGS. 1 to 12B, and a second embodiment is explained in the description with reference to FIG. 13.

### First Embodiment

Firstly, the schematic configuration of an animal breeding system 1 according to the first embodiment will be described with reference to FIG. 1. FIG. 1 is a perspective schematic diagram illustrating the schematic configuration of the animal breeding system 1 according to the first embodiment.

For ease of explanation, FIG. 1 displays a three-dimensional orthogonal coordinate system including a Z axis with which the upward vertical direction is the positive direction and the downward vertical direction is the negative direction. Such an orthogonal coordinate system may be displayed also in another drawing used for the description below.

In the description below, for a component including a plurality of pieces, a numeral may be attached only to a part of the pieces, and attachment of numerals may be omitted for the other parts. In such cases, the part with the numeral attached thereto and the other parts are considered as having the same configuration. With regard to the part with the numeral attached thereto, a number may be attached to the numeral in the form of "-number" to identify each piece ("70-1", "70-2", ..., for example).

As illustrated in FIG. 1, the animal breeding system 1 includes a rack 10, a carrier robot 20, a guide rail 30, an exchange robot 40, and an exchange work table 50. The rack 10 is a storage rack that can contain therein cages C for breeding animals in multiple stages and rows thereof. It should be noted that the rack 10 is an example of containing means.

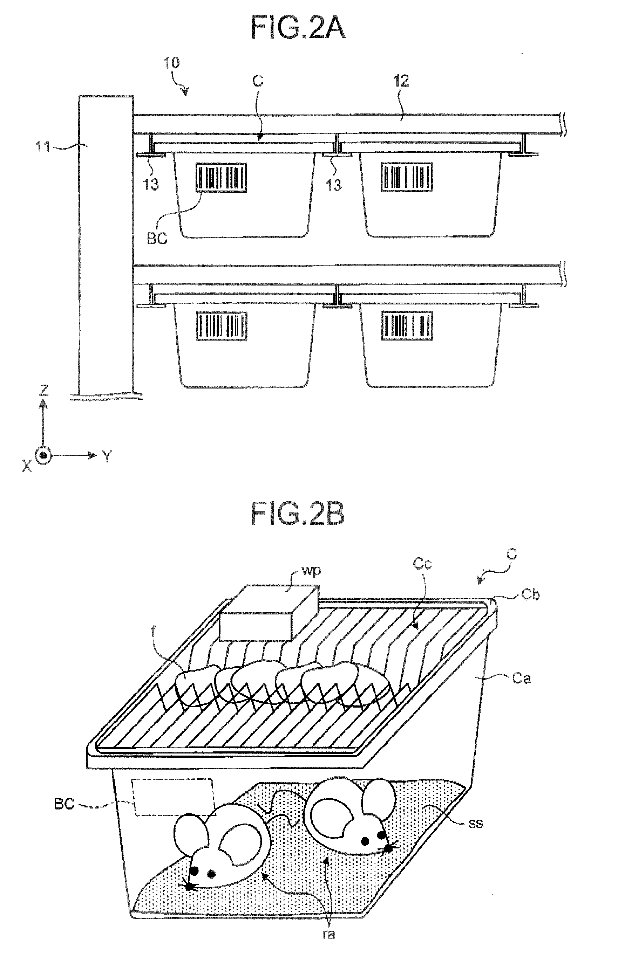

The rack 10 and the cage C described above will now be specifically explained. FIG. 2A is a substantially front view illustrating the configuration of the rack 10. FIG. 2B is a perspective schematic diagram illustrating the configuration of the cage C.

As illustrated in FIG. 2A, the rack 10 includes side wall parts 11, shelf parts 12 across the side wall parts 11, and cage supporting parts 13 suspended from the bottom face of the shelf parts 12. It should be noted that the cage supporting parts 13 extend in the X-axis direction in FIG. 2A, and the sectional shape thereof is formed in an approximately T-shape.

As illustrated in FIG. 2B, the cage C includes a body part Ca, a flange part Cb formed along the opening edge of the body part Ca, and a cover part Cc. The bottom of the body part Ca is covered with a sawdust sheet ss having a sheet shape for example, on which a mouse ra to be bred is housed in the body part Ca.

The body part Ca and the flange part Cb are made of special polyester, for example, and the cage C can be used as a disposable cage.

The cover part Cc has a wire-bar shape made of a stainless material or other materials and a recess formed in the center thereof, for example. In the recess, feed f is placed. On the cover part Cc, a water supply package wp is placed with a water inlet thereof inserted into the body part Ca.

As illustrated in FIGS. 2A and 2B, a barcode BC is attached to each of the cages C. The barcode BC contains identification information for identifying each of the cages C. This will be described in detail later.

As illustrated in FIG. 2A, the cage C is contained in the rack 10 in a hanging manner with the flange part Cb placed on the cage supporting part 13.

Back to explanation of FIG. 1, the carrier robot 20 will be next described. The carrier robot 20 is disposed between the rack 10 and the exchange work table 50 as a certain carrying position. The carrier robot 20 includes a hand (a numeral is omitted) including a retention mechanism for the cage C and uses the hand to perform operations of taking the cage C in and out from the rack 10 and carrying the case C between the rack 10 and the exchange work table 50.

The carrier robot 20 further includes a thermographic camera (hereinafter, referred to as "thermo camera 27"), which is omitted in FIG. 1, near the hand and performs operations of bringing the thermo camera 27 close to the cage C in the rack 10 to capture the inside of the cage C. It should be noted that the thermo camera 27 is an example of capturing means.

The carrier robot 20 includes a travelling base part 21 that can move along the guide rail 30 as indicated by the arrow 101 in FIG. 1, and a robot base 22 vertically movably with respect to the travelling base part 21 as indicated by the arrow 102 in FIG. 1.

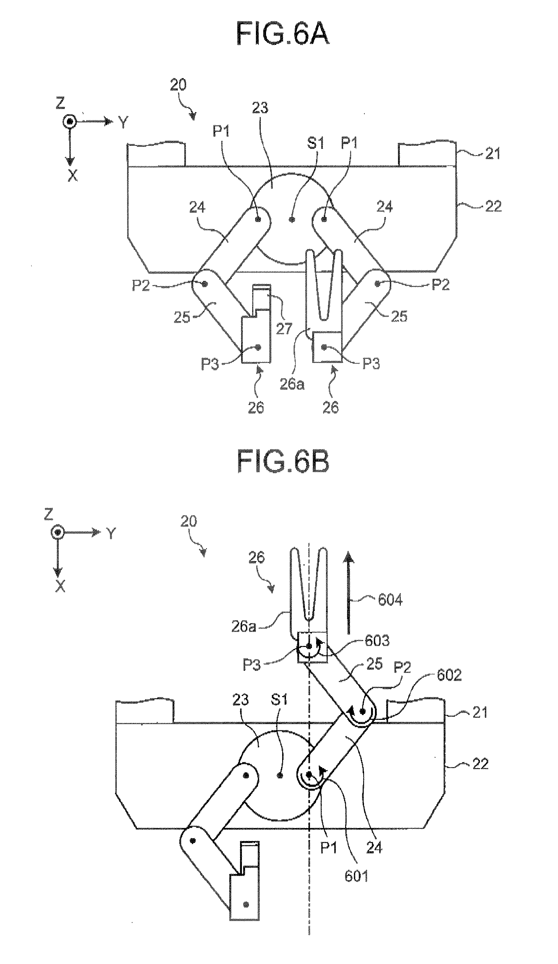

With this configuration, the hand can be positioned individually to the storage positions of all the cages C in the multiple stages and rows in the rack 10. The details of the configuration and operations of the carrier robot 20 will be described below with reference to FIG. 6A, for example.

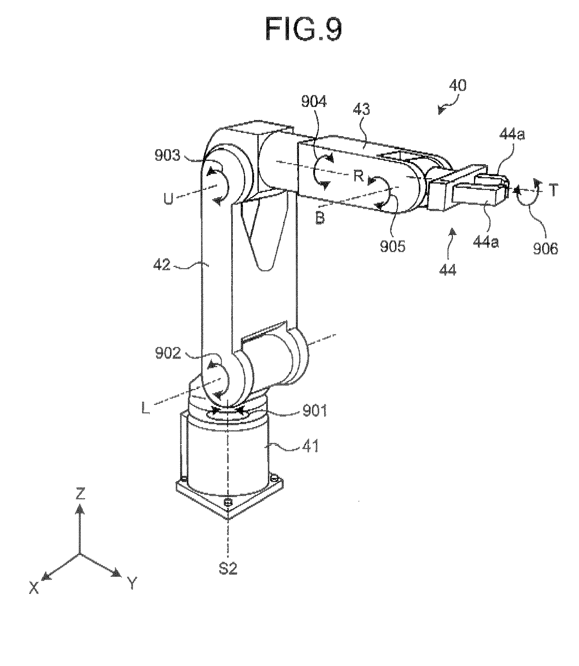

The exchange robot 40 is disposed near the exchange work table 50 and performs operations of exchanging a necessary article such as the feed f, the water supply package wp, and the sawdust sheet ss, which needs to be exchanged in breeding animals, for the cage C carried to the exchange work table 50. The details of the configuration and operations of the exchange robot 40 will be described later with reference to FIG. 9, for example.

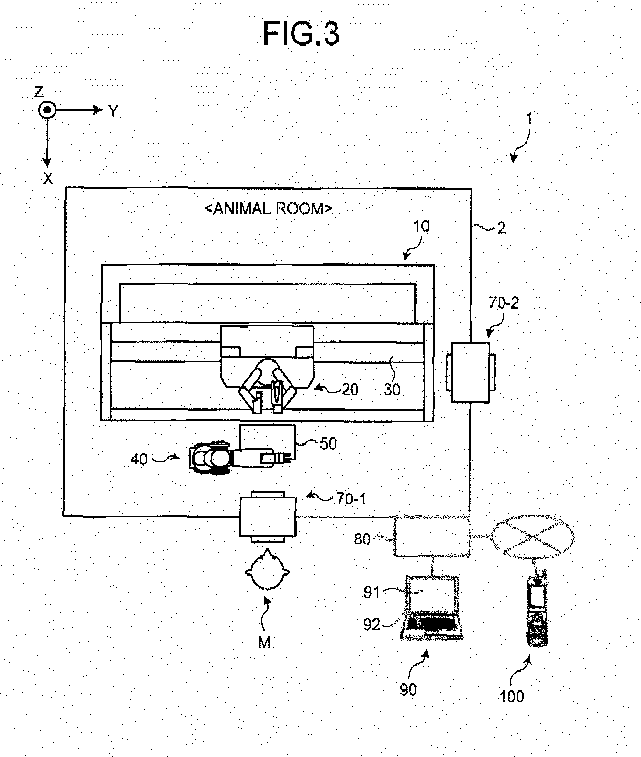

Secondly, the configuration of the animal breeding system 1 according to the first embodiment will be described in more details'. FIG. 3 is a plane schematic diagram illustrating the configuration of the animal breeding system 1 according to the first embodiment.

As illustrated in FIG. 3, the animal breeding system 1 includes an animal room 2 having an isolation space isolated from the outside by partition walls.

The air cleanness, temperature, and other conditions in the animal room 2 are maintained to a constant level by contamination control. The animal room 2 accommodates therein the rack 10, the carrier robot 20, and the exchange robot 40 illustrated in FIG. 1.

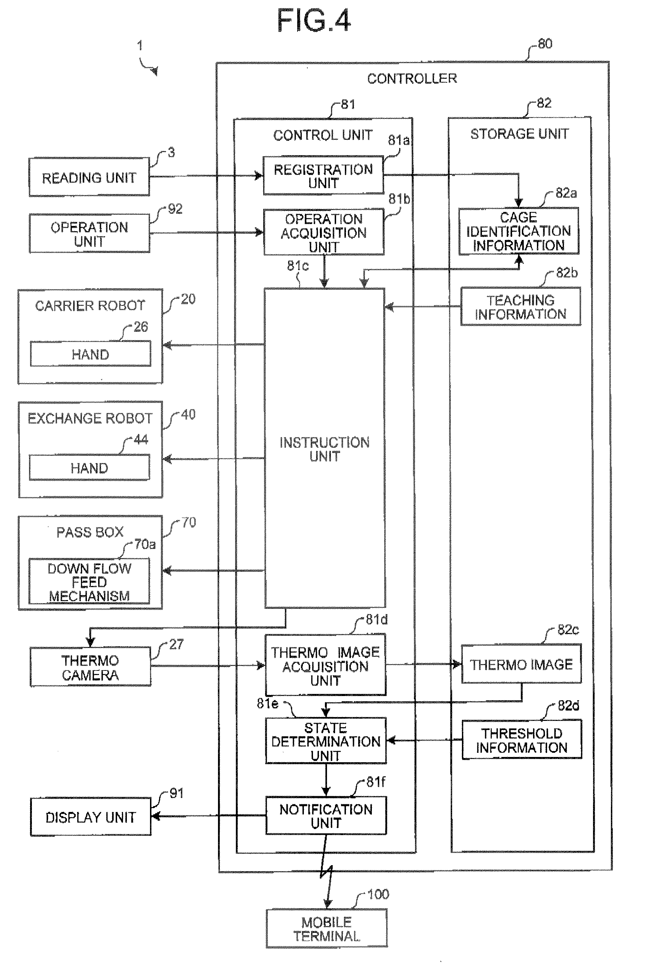

One of the partition walls of the animal room 2, a pass box 70 is provided that has an intermediate room that is communicated with the inside and outside of the animal room 2. The pass box 70 includes a downflow feed mechanism 70a (see FIG. 4, for example) for supplying clean air flow into the intermediate room.

The articles are delivered through the pass box 70 from the outside to inside or from the inside to outside of the animal room 2. This configuration can reduce the risk that a disease is transmitted from a mouse ra housed inside the animal room 2 to an operator M outside or from the operator M to the mouse ra.

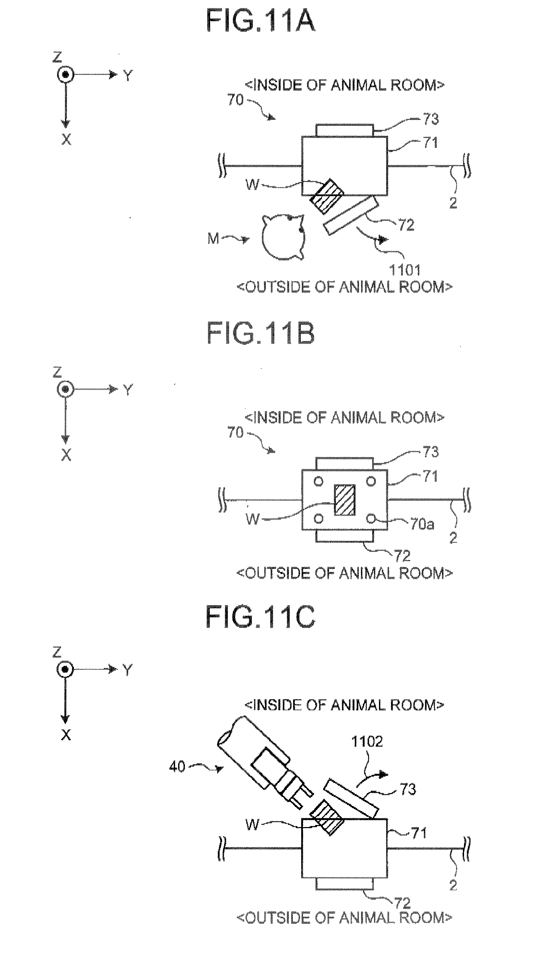

FIG. 3 illustrates an example of providing two pass boxes 70-1 and 70-2. The pass box 70-1 is used as a supply port of the necessary article such as feed f. The pass box 70-2 is used as a carriage port through which the cage C is carried in and out from the animal room 2. The details of the delivery operations through the pass box 70 will be described later with reference to FIGS. 11A to 11C.

As illustrated in FIG. 3, the animal breeding system 1 includes a controller 80 in the outside of the animal room 2. The controller 80 is connected to various apparatuses such as the carrier robot 20 and the exchange robot 40 inside the animal room 2 in a manner of allowing information transmission.

The controller 80 performs control to operations of each apparatus connected thereto and includes various control devices, arithmetic processors, and storages. The details of the controller 80 will be described later with reference to FIG. 4.

FIG. 3 illustrates the controller 80 in a single unit. However, the configuration of the controller 80 is not limited thereto. For example, the controller 80 may consist of a plurality of units associated with each of various apparatuses to be controlled. Alternatively, the controller 80 may be disposed inside the animal room 2.

To the controller 80, an operation terminal 90 including a display unit 91 such as a display and an operation unit 92 such as a keyboard is connected, and a mobile terminal 100 is also connected via a wide area network. It should be noted that it makes no difference if the connection configuration of each of these devices and the controller 80 is wired or wireless.

Thirdly, the block configuration of the animal breeding system 1 according to the first embodiment will be described with reference to FIG. 4. FIG. 4 is a block diagram of the animal breeding system 1 according to the first embodiment. It should be noted that FIG. 4 illustrates only the components necessary for description of the animal breeding system 1, and description of general components is omitted.

The description with reference to FIG. 4 explains the inner configuration of the controller 80, and description of the components that have been already explained may be omitted.

As illustrated in FIG. 4, the controller 80 includes a control unit 81 and a storage unit 82. The control unit 81 further includes a registration unit 81a, an operation acquisition unit 81b, an instruction unit 81c, a thermo image acquisition unit 81d, a state determination unit 81e, and a notification unit 81f. It should be noted that the instruction unit 81c is an example of instruction means.

The storage unit 82 is a storage device such as a hard disc drive and a nonvolatile memory and stores therein cage identification information 82a, teaching information 82b, a thermo image 82c, and threshold information 82d.

The control unit 81 performs overall control of the controller 80. The registration unit 81a registers identification information of the cage C to be newly carried into the animal room 2 on the cage identification information 82a. Specifically, the registration unit 81a receives data related to the barcode BC of the cage C read by a reading unit 3 including a barcode scanner, for example, and registers the data thus received on the cage identification information 82a.

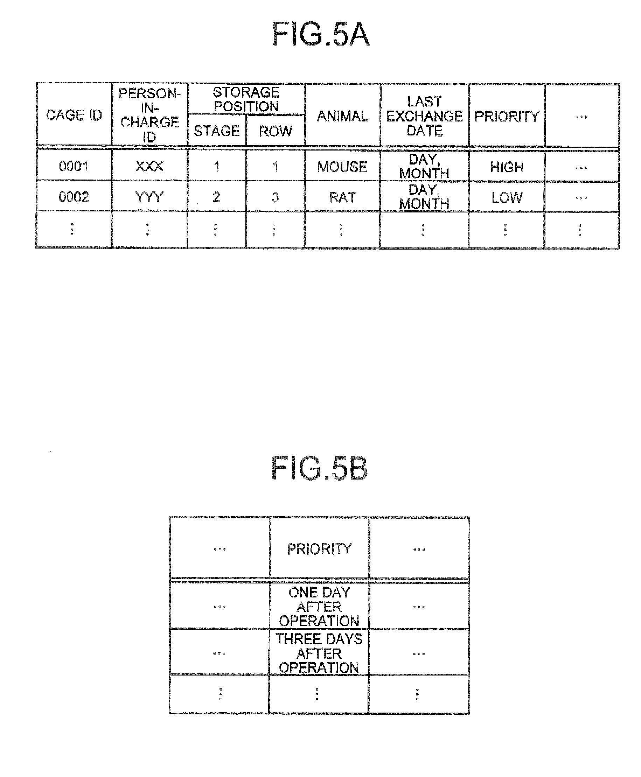

An example of the cage identification information 82a will now be explained. FIGS. 5A and 5B are diagrams (Nos. 1 and 2, respectively) illustrating an example of the cage identification information. As illustrated in FIG. 5A, the cage identification information 82a includes a "cage ID" item, a "person-in-charge ID" item, a "storage position" item, an "animal" item, a "previous exchange date" item, and a "priority" item, for example.

The "cage ID" item is an item in which an identifier allocated to each of the cages C is stored. The "person-in-charge ID" item is an item in which an identifier of a person in charge of each of the cages C is stored. The "storage position" item is an item in which the storage position of the cages C that is indicated by a "stage" and a "row" of the rack 10 is stored.

The "animal" item is an item in which the type of bred animal housed in the cage C is stored. The "previous exchange date" item is an item in which the date of last exchange of necessary articles in the cage C is stored. The "priority" item is an item in which a priority value indicating the priority of monitoring the cage C is stored.

FIG. 5A illustrates storage values in each item by text format for ease of explanation. However, this is not intended to limit the format of data stored in actual cases.

This example assumes that in the barcode BC of the cage C newly carried into the animal room 2, input values are input in advance for each of the "cage ID" item, the "person-in-charge ID" item, the "animal" item, and the "priority" item.

In such a case, the registration unit 81a registers each of the input values described above on the cage identification information 82a, and generates and registers a "storage position" in accordance with the vacancy condition of the rack 10 and other conditions. The registration unit 81a registers an initial value, for example, for the "previous exchange date" item. The "previous exchange date" and other items that will change in the course of breeding are updated as necessary by the instruction unit 81c described later.

FIG. 5A illustrates an example in which relative priority values such as "high" and "low" are stored in the "priority" item. However, specific priority values such as "one day after operation" or "three days after operation" may be stored, as illustrated in FIG. 5B.

In other words, any priority value that enables weighting in monitoring the cages C may be used. It should be noted that the instruction unit 81c described later adjusts the time or frequency of capturing the cage C performed by the thermo camera 27 in accordance with such a priority value.

Back to the explanation of FIG. 4, the operation acquisition unit 81b will now be described. The operation acquisition unit 81b acquires an input value indicating the content of operation performed by the operator M from the operation unit 92 and sends the input value thus acquired to the instruction unit 81c. Examples of the input value indicating the content of operation include the "cage ID" of the cage C subjected to an operation such as exchange of necessary articles.

The instruction unit 81c compares the input value received from the operation acquisition unit 81b with the cage identification information 82a to identify the storage position of the cage C subjected to the operation. The instruction unit 81c generates actuating signals for actuating the carrier robot 20 and the exchange robot 40 to operate based on the teaching information 82b in accordance with the identified storage position of the cage C, and then outputs the actuating signal to the carrier robot 20 and the exchange robot 40.

The teaching information 82b is information including a "job" that is a specific computer program for practically actuating the carrier robot 20 and the exchange robot 40 in accordance with the contents of operations and is registered in advance through an input device not illustrated (such as a programming pendant).

The "job" includes the mode of operations related to breeding of animals (specifically, information such as where the cage is carried as a particular carrying position and what necessary article is placed in what position in the cage C by gripping what position of the necessary article).

The instruction unit 81c generates the actuating signals for actuating the carrier robot 20 and the exchange robot 40 based on the "job" described above. The actuating signal is generated as a pulse signal sent to a servo motor installed on each joint of the carrier robot 20 and the exchange robot 40.

A hand 26 of the carrier robot 20 and a hand 44 of the exchange robot 40 that are illustrated in FIG. 4 will be described later.

The instruction unit 81c also causes the downflow feed mechanism 70a of the pass box 70 to supply clean air in a particular timing when an article is delivered between the inside and outside of the animal room 2.

The instruction unit 81c further causes the thermo camera 27 to take an image of the inside of the cage C to be monitored, when the cage C is monitored.

Apart from the explanation of FIG. 4 now, the configuration and operations of the carrier robot 20 and the exchange robot 40 that are actuated based on instructions from the instruction unit 81c will be sequentially described in detail.

A configuration example of the carrier robot 20 will be first described with reference to FIGS. 6A and 6B. FIG. 6A is a plane schematic diagram illustrating the configuration of the carrier robot 20. FIG. 6B is a plane schematic diagram illustrating an operation performed by the carrier robot 20. It should be noted that explanation of the travelling base part 21 and the robot base 22, which have been already described, will be omitted.

As illustrated in FIG. 6A, the carrier robot 20 is a double-arm robot including a pair of right and left arms. The carrier robot 20 includes an arm base 23, first arms 24, second arms 25, and the hands 26. The hand 26 is an example of carrying means. It should be noted that FIG. 6A illustrates the state where both of the arms are contracted.

The arm base 23 is provided on the robot base 22 rotatably around a shaft S1. The first arm 24 is connected to the arm base 23 in a manner that the base end thereof is rotatable around a shaft Pl. The second arm 25 is connected to the distal end of the first arm 24 in a manner that the base end thereof is rotatable around a shaft P2.

To the distal end of the second arm 25, the base end of the hand 26 is also connected rotatably around a shaft P3. One of the right and left hands 26 includes a retention part 26a that is a mechanism for retaining the cage C. Furthermore, near the other hand 26, the thermo camera 27 is provided. Near the other hand 26, the thermo camera 27 is provided.

The retention part 26a is a flat member in an approximately U shape in a plane view and retains the cage C with the cage C placed on the top thereof. It should be noted that not only such a placing manner but also a suction pad, for example, may be used to retain the cage C.

The thermo camera 27 is a thermographic camera as described above and is a device that can provide capturing data as a thermal distribution diagram by analyzing infrared radiation from the mouse ra in the cage C.

As illustrated in FIG. 6B, the carrier robot 20 extends the arm thereof while controlling the moving direction and orientation of the hand 26 to a particular direction and orientation (see the arrow 604 in FIG. 6B).

For example, as illustrated in FIG. 6B, in the case of the arm including the retention part 26a, the carrier robot 20 rotates the first arm 24 counterclockwise around the shaft P1 by a rotation amount θ (see the arrow 601 in FIG. 6B). The second arm 25 at this time is rotated clockwise around the shaft P2 with respect to the first arm 24 by a double rotation amount, that is, 2θ (see the arrow 602 in FIG. 6B).

The hand 26 is rotated counterclockwise around the shaft P3 with respect to the second arm 25 by a rotation amount θ (see the arrow 603 in FIG. 6B). With this configuration, the arm can be extended with the moving direction of the hand 26 maintained linearly along the X axis and with the orientation of the hand 26 (that is, the orientation of the distal end of the retention part 26a) maintained forward.

In the case of contracting the arm, each of the orientations of rotation around the shafts P1, P2, and P3 is reversed.

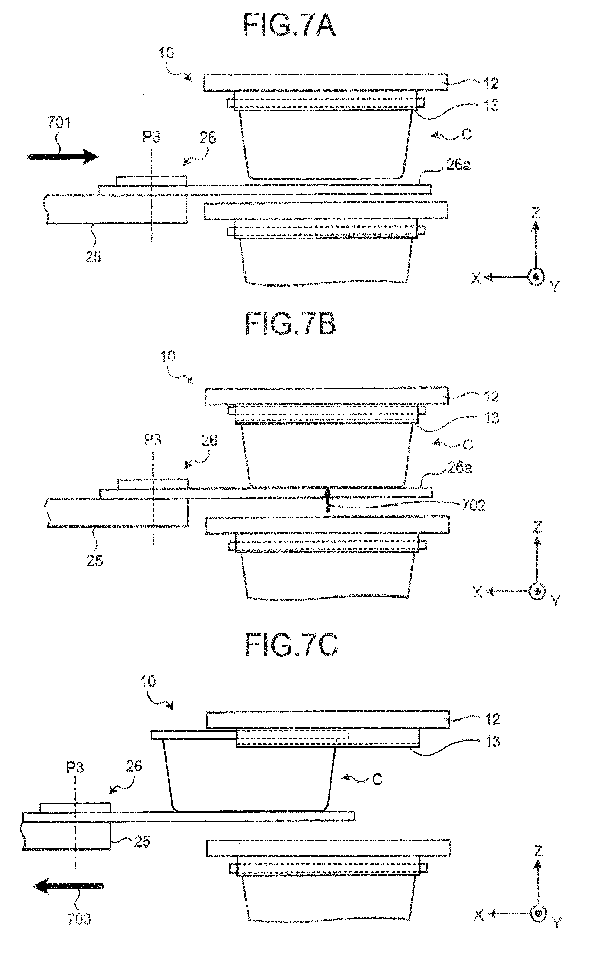

A series of operations performed by the carrier robot 20 carrying the cage C out from the rack 10 will be next described. FIGS. 7A to 7C are schematic diagrams (Nos. 1 to 3, respectively) explaining a series of operations performed by the carrier robot 20 carrying the cage C out from the rack 10.

As illustrated in FIG. 7A, when carrying the cage C out from the rack 10, the instruction unit 81c firstly instructs the carrier robot 20 to perform operations of positioning the hand 26 to the storage position of the cage C to be taken out and advancing the retention part 26a below the cage C (see the arrow 701 in FIG. 7A).

Subsequently, as illustrated in FIG. 7B, the instruction unit 81c instructs the carrier robot 20 to perform operations of lifting the hand 26 to place the cage C on the retention part 26a and then further lifting the hand 26 to cause the flange part Cb (see FIG. 2B) of the cage C to be raised from the cage supporting part 13 (see the arrow 702 in FIG. 7B).

Thereafter, as illustrated in FIG. 7C, the instruction unit 81c instructs the carrier robot 20 to perform operations of contracting the arm with the flange part Cb raised from the cage supporting part 13 and drawing the cage C out from the rack 10 (see the arrow 703 in FIG. 7C). With this configuration, the cage C can be smoothly drawn out from the rack 10.

By contrast, when carrying the cage C into the rack 10, the operations in series illustrated in FIGS. 7A to 7C may be performed in the reverse order.

When carrying the cage C into and out from the rack 10 as described above, the operating speed of the carrier robot 20 may be adjusted depending on if the cage C is placed on the retention part 26a, for example, so as not to give excessive stress to the mouse ra in the cage C.

Specifically, when the cage C is not placed on the retention part 26a, the carrier robot 20 may be operated at a relatively high speed. When the cage C is placed on the retention part 26a, the carrier robot 20 may be operated at a relatively low speed. This enables effective operations of carrying the cage C at the same time avoiding stress to the mouse ra.

Detecting if the cage C is placed on the retention part 26a can be performed by providing a detection device such as a touch sensor on the retention part 26, for example.

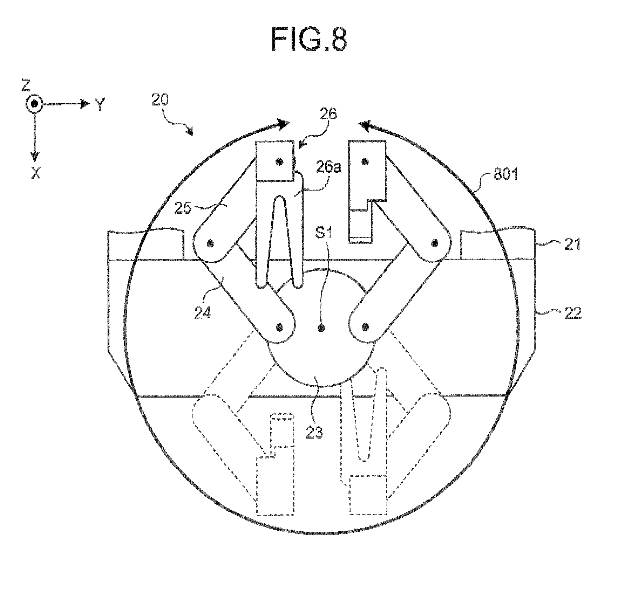

After the carrier robot 20 carries the cage C out from the rack 10, the instruction unit 81c instructs the carrier robot 20 to perform an operation of carrying the cage C to the exchange work table 50 as a certain carrying position. FIG. 8 is a diagram illustrating circular movement of the carrier robot 20. It should be noted that the cage C is placed on the retention part 26a in FIG. 8 although the illustration thereof is omitted.

More specifically, after the carrier robot 20 carries the cage C out from the rack 10, the instruction unit 81c causes the arm base 23 to rotate around the shaft S1 as illustrated in FIG. 8 so that the distal end of the retention part 26a is directed from the rack 10 side to the exchange work table 50 side (see the arrow 801 in FIG. 8). At the same time, the instruction unit 81c causes the travelling base part 21 and the robot base 22 to perform operations of carrying the cage C to the vicinity of the exchange work table 50. Thereafter, the instruction unit 81c causes the carrier robot 20 to extend the arm to place the cage C on the exchange work table 50.

Needless to say, to return the cage for which necessary articles has been exchanged to the rack 10, the carrying operations of the cage C is performed in the reverse order.

The configuration of the exchange robot 40 will be next described with reference to FIG. 9. FIG. 9 is a perspective schematic diagram illustrating the configuration of the exchange robot 40.

As illustrated in FIG. 9, the exchange robot 40 is a single-arm, multiaxis robot. More specifically, the exchange robot 40 includes a base part 41, a first arm 42, a second arm 43, and a hand 44.

The base part 41 is fixed to the floor, for example, and supports the base end of the first arm 42 rotatably around a shaft S2 (see the arrow 901 in FIG. 9) and around a shaft L (see the arrow 902 in FIG. 9).

The first arm 42 is supported by the base part 41 with the base end thereof as described above and supports the base end of the second arm 43 rotatably around a shaft U with the distal end thereof (see the arrow 903 in FIG. 9).

The second arm 43 is supported by the first arm 42 with the base end thereof as described above and supports the base end of the hand 44 around a shaft B with the distal end thereof (see the arrow 905 in FIG. 9). The second arm 43 is also disposed rotatably around a shaft R (see the arrow 904 in FIG. 9).

The hand 44 is supported by the second arm 43 with the base end thereof as described above and disposed rotatably around a shaft T (see the arrow 906 in FIG. 9). The hand 44 includes a pair of gripping claws 44a.

The gripping claws 44a are a gripping mechanism included in the exchange robot 40 and configured to pinch and thus grip the necessary article such as the feed f, the water supply package wp, and the sawdust sheet ss.

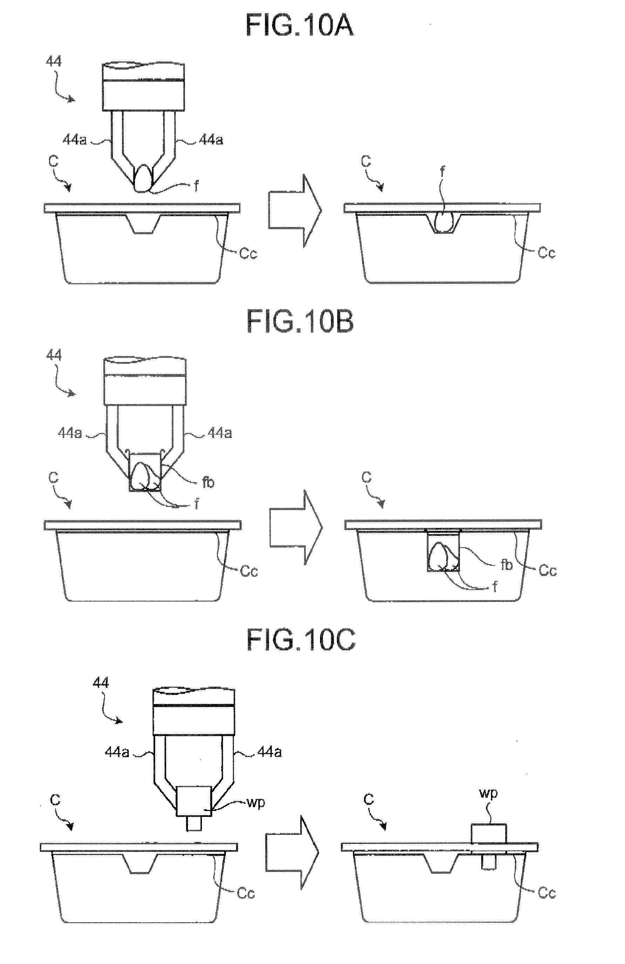

Described with reference to FIGS. 10A to 10D will be operations of exchanging the necessary articles performed by the exchange robot 40 based on instructions from the instruction unit 81c. FIGS. 10A to 10D are schematic diagrams (Nos. 1 to 4, respectively) illustrating exchange operations performed by the exchange robot 40.

Firstly, exchanging the feed f will be described. As illustrated in FIG. 10A, to exchange the feed f, the instruction unit 81c instructs the exchange robot 40 to perform operations of gripping the feed f piece by piece with the gripping claws 44a and carrying the feed f thus gripped above the cage C placed on the exchange work table 50 to place the feed f on the recess formed in the cover part Cc, for example.

The gripping claws 44a is not limited to claws that grip the feed f piece by piece. For example, when a plurality of pieces of the feed f in a feed basket fb are supplied as illustrated in FIG. 10B, the instruction unit 81c may instruct the exchange robot 40 to grip and hang the feed basket fb above the cover part Cc with the gripping claws 44a.

To exchange the water supply package wp, as illustrated in FIG. 10C, the instruction unit 81c instructs the exchange robot 40 to perform operations of gripping the water supply package wp with the gripping claws 44a with the water inlet directed downward and placing the water supply package wp thus gripped such that the water inlet is inserted into the body part Ca from the cover part Cc, for example.

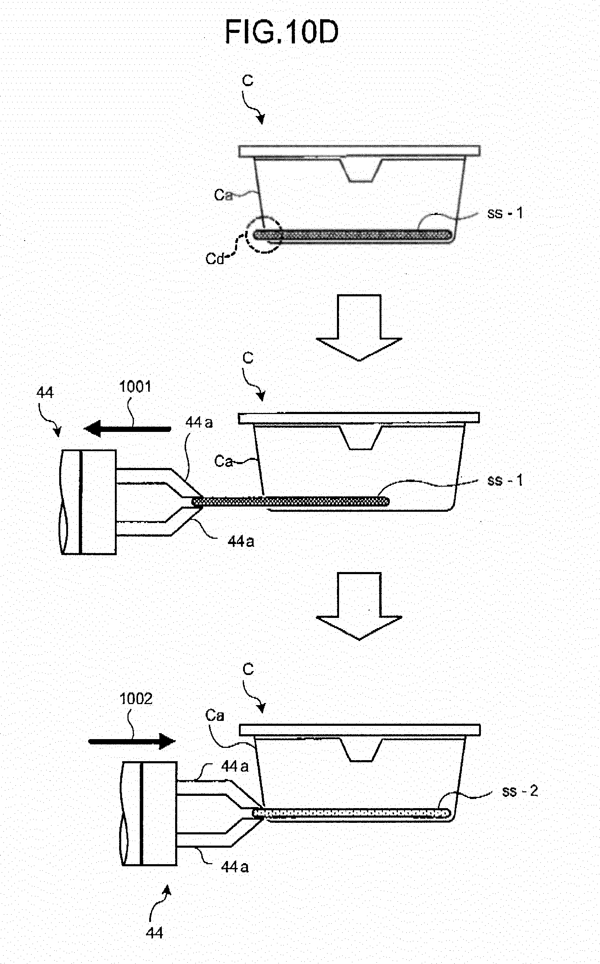

To exchange the sawdust sheet ss, the procedure described below may be taken. That is, the body part Ca of the cage C may be provided with an insertion opening Cd for the sawdust sheet ss in advance as illustrated by a dashed, closed curve in FIG. 10D. In such a case, the instruction unit 81c may instruct the exchange robot 40 to grip an old sawdust sheet ss-1 with the gripping claws 44a to draw it out from this insertion opening Cd (see the arrow 1001 in FIG. 10D) and insert a new sawdust sheet ss-2 from the same insertion opening Cd (see the arrow 1002 in FIG. 10D).

With regard to the necessary articles used in the exchange operations, it is desirable that a predetermined amount of necessary articles be prepared for stock near the exchange robot 40 in the animal room 2. In accordance with decrease in the amount of the stock, new ones will need to be supplied into the animal room 2. For that purpose, articles such as the necessary articles are delivered between the inside and outside of the animal room 2 through the pass box 70 as described above.

Such delivery operations of articles will be described below with reference to FIGS. 11A to 11C. FIGS. 11A to 11C are schematic diagrams (Nos. 1 to 3, respectively) illustrating delivery operations of articles between the inside and outside of an animal room 2. It should be noted that in FIGS. 11A to 11C, a numeral "W" is attached to the article and a case is explained where an article W is delivered from the outside to inside of the animal room 2.

As illustrated in FIG. 11A, the pass box 70 is provided on at least one of the partition walls of the animal room 2 and includes an intermediate room 71, an outside door 72, and an inside door 73. The intermediate room 71 is communicated with the inside and outside of the animal room 2. However, either one side of the intermediate from 71 to the inside and the outside is sure to be closed by the outside door 72 or the inside door 73.

Specifically, as illustrated in FIG. 11A, the operator M opens the outside door 72 from the outside of the animal room 2 (see the arrow 1101 in FIG. 11A) and puts the article W in the intermediate room 71. At this time, it is desirable that the inside door 73 be locked based on an instruction from the instruction unit 81c, for example.

Thereafter, as illustrated in FIG. 11B, the outside door 72 is also locked after closed, and clean air is supplied to the inside of the intermediate room 71 by the downflow feed mechanism 70a. With this configuration, dusts or other contaminants attached to the article W can be removed.

After the clean air is supplied for a particular period of time, as illustrated in FIG. 11C, the lock of the inside door 73 is released, and the inside door 73 is opened by the exchange robot 40 (see the arrow 1102 in FIG. 11C). The exchange robot 40 then takes out the article W put in the intermediate room 71, stocks the article W in a predetermined stock position, and then closes the inside door 73.

To deliver the article W from the inside to outside of the animal room 2, the delivery is performed in the reverse order. With this configuration, the air cleanness and other conditions inside the animal room 2 can be maintained while the article W is delivered between the inside and outside of the animal room 2. Furthermore, the intermediate room 71 cannot be communicated with the inside and outside of the animal room 2 at the same time, which can significantly reduce the risk that a disease is transmitted between the mouse ra and the operator M.

FIGS. 11A to 11C illustrates a case where the article W is delivered between the operator M and the exchange robot 40. However, the cage C may be delivered as an article W between the operator M and the carrier robot 20. In such a case, the carrier robot 20 may be provided with a gripping mechanism to grip the inside door 73 to open or close it, and the instruction unit 81c may be configured to cause the inside door 73 to be automatically opened or closed in appropriate timings.

Described with reference to FIGS. 12A and 12B will be operations of monitoring the cage C performed by the carrier robot 20 based on instructions from the instruction unit 81c. FIGS. 12A and 12B are schematic diagrams (Nos. 1 and 2, respectively) illustrating the monitoring operations performed by the carrier robot 20. It should be noted that explanation of FIG. 12A will be partly simplified because FIG. 12A corresponds to FIG. 6B, which has been already presented.

Specifically, as illustrated in FIG. 12A, also when extending the arm on which the thermo camera 27 is provided, the carrier robot 20 controls the moving direction and orientation of the hand 26 to be directed to a particular direction and orientation (see the arrow 1204 in FIG. 12A).

More specifically, the first arm 24 is rotated clockwise around the shaft P1 by a rotation amount θ (see the arrow 1201 in FIG. 12A). The second arm 25 is rotated counterclockwise around the shaft P2 with respect to the first arm 24 by a double rotation amount, that is, 2θ (see the arrow 1202 in FIG. 12A).

The hand 26 is rotated clockwise around the shaft P3 with respect to the second arm 25 by a rotation amount θ (see the arrow 1203 in FIG. 12A).

The instruction unit 81c instructs the carrier robot 20 to perform operations of extending the arm as described above and bringing the thermo camera 27 close to the cage C to be monitored, as illustrated in FIG. 12B, to capture the inside of the cage C.

The instruction unit 81c at this time regulates the time or frequency of capturing the cage C in accordance with the priority value stored in the "priority" in the cage identification information 82a. This regulation may be performed in accordance with the time zone, for example, if it is the daytime in which the operator M is nearby or the nighttime in which the operator M is not nearby. If it is the night time in which the operator M is not nearby, for example, measures such as uniformly increasing the frequency of capturing are preferably taken.

Capturing data acquired with the monitoring operations described above can be used for informing the operator M of an abnormal state, for example. Back to the explanation of FIG. 4, the thermo image acquisition unit 81d will now be described.

The thermo image acquisition unit 81d receives the capturing data from the thermo camera 27 and causes the storage unit 82 to store therein the capturing data thus received as the thermo image 82c. The state determination unit 81e analyzes the thermo image 82c to determine the state of the mouse ra in the cage C.

For example, the state determination unit 81e at this time uses the threshold information 82d stored in the storage unit 82 in advance. The threshold information 82d is information including a lower limit threshold and an upper limit threshold of the body temperature of the mouse ra, for example. More specifically, the state determination unit 81e analyzes the thermo image 82c. When detecting a heat distribution in which the lower limit threshold or the upper limit threshold is exceeded, the state determination unit 81e determines that an abnormal situation occurs and notifies the notification unit 81f of the occurrence.

After the notification unit 81f receives the notification of the abnormal situation, the notification unit 81f causes the display unit 91 to display a message or other forms indicating the occurrence. The notification unit 81f also notifies the mobile terminal 100 carried by the operator M of the abnormal situation via a wide area network, for example.

With this configuration, the operator M can be immediately notified of any abnormal situations of the mouse ra, whereby the operator M can take appropriate actions in accordance with the abnormal situation. This also can improve the accuracy and reliability of experiments.

As described above, the animal breeding system according to the first embodiment includes a rack, a carrier robot, a thermo camera (a camera), and an instruction unit. The rack contains therein cages for breeding animals. The carrier robot includes a hand (robot hand) including a retention mechanism for a cage to be carried. The camera is provided near the hand. The instruction unit instructs the carrier robot to perform operations of taking the cage in and out from the rack while retaining the cage with the hand to carry the cage between the rack and a certain carrying position and operations of bringing the thermo camera 27 close to the cage C in the rack 10 to cause the thermo camera 27 to capture the inside of the cage C.

The animal breeding system according to the first embodiment can thus automate breeding of animals.

The first embodiment described above has been described by citing an example in which both the carrier robot and the exchange robot are provided in the animal room. However, the arrangement is not limited thereto. For example, the exchange robot may be disposed outside the animal room. This will be described below as a second embodiment with reference to FIG. 13.

### Second Embodiment

FIG. 13 is a plane schematic diagram illustrating the configuration of an animal breeding system 1a according to a second embodiment. It should be noted that the illustration of the operation terminal 90 and the mobile terminal 100 is omitted in FIG. 13 because FIG. 13 corresponds to FIG. 3, which has been presented in the first embodiment. Here, mainly the parts different from in the first embodiment will be described.

As illustrated in FIG. 13, the animal breeding system 1a according to the second embodiment is different from that in the first embodiment in that an exchange robot 40 is disposed outside an animal room 2.

The exchange robot 40 is disposed near a pass box 70, through which exchange operations of necessary articles are performed.

More specifically, the instruction unit 81c causes the carrier robot 20 to carry the cage C to the pass box 70 as the certain carrying position and causes the exchange robot 40 to perform exchange operations of necessary articles with respect to the cage C carried into the pass box 70.

This configuration can downsize the animal room 2, thereby downsizing the installation space of the animal breeding system 1a. Furthermore, in the case of the second embodiment, the exchange operations performed by the exchange robot 40 may be substituted by the operator M.

In such a case, the introduction of the exchange robot 40 is not required, whereby the animal breeding system 1a can be constructed at a low cost.

### Another Embodiment

In each of the embodiments described above, the carrier robot is a double-arm robot, and the exchange robot is a single-arm robot as an example. However, their configurations are not limited thereto. More specifically, the carrier robot may include a plurality of single-arm robots, and the exchange robot may be a multi-arm robot including two or more arms.

The number of shafts in each of the carrier robot and the exchange robot is not limited to the number exemplified in each of the embodiments described above.

In each of the embodiments described above, the camera is a thermographic camera. However, the type of the camera is not specified.

In each of the embodiments described above, each cage is identified with a barcode. However, the identification method is not limited to barcodes, needless to say. For example, matrix-type two-dimensional codes or RFID (Radio Frequency Identification) may be used.

In each of the embodiments described above, the cages are disposable. However, the cage may not be disposable.

In the embodiments described above, the bred animals are mice. However, the type of bred animals is not specified, and any animal that can be bred in cages containable in the rack may be bred.

## Claims

1. An animal breeding system (1, 1a) comprising:
a rack (10) containing therein a cage for breeding an animal;
a carrier robot (20) including a robot hand having a retention mechanism for the cage;
a camera (27) provided near the robot hand; and
an instruction unit (81c) configured to instruct the carrier robot (20) to perform an operation of taking the cage in and out from the rack (10) while retaining the cage with the robot hand to carry the cage between the rack (10) and a certain carrying position and an operation of bringing the camera (27) close to the cage in the rack (10) to cause the camera (27) to capture an inside of the cage.

2. The animal breeding system (1, 1a) according to claim 1, further comprising:
an animal room (2) having an isolation space isolated from an outside by partition walls and including the rack (10) and the carrier robot (20) in the isolation space;
a pass box (70) provided in one of the partition walls, the pass box (70) having an intermediate room that is communicated with an inside and the outside of the animal room (2); and
a feed mechanism (70a) supplying clean airflow into the intermediate room, wherein
the instruction unit (81c) causes the feed mechanism (70a) to supply clean airflow into the intermediate room and instructs the carrier robot (20) to perform an operation of delivering an article through the pass box (70) when the article is delivered between the inside and outside of the animal room (2).

3. The animal breeding system (1, 1a) according to claim 1 or 2, further comprising:
a storage unit (82) storing therein identification information that associates an identifier of the cage with a position at which the cage is contained in the rack (10), wherein
the rack (10) further contains therein one or more cages for breeding the animal, and
the instruction unit (81c) instructs the carrier robot (20) to perform operations of carrying a specific one of the cages and capturing the specific cage on the basis of the identification information.

4. The animal breeding system (1, 1a) according to claim 3, wherein
the storage unit (82) further stores therein the identification information and a priority value allocated to each cage in association with each other, and
the instruction unit (81c) regulates time or frequency of capturing the cage by using the camera (27) in accordance with the priority value.

5. The animal breeding system (1, 1a) according to any one of claims 1 to 4, wherein the camera (27) includes a thermographic camera.

6. The animal breeding system (1, 1a) according to any one of claims 2 to 5, further comprising:
an exchange robot (40) including a gripping mechanism for gripping an article to be exchanged in breeding the animal, wherein
the instruction unit (81c) instructs the exchange robot (40) to perform an operation of exchanging the exchange article while gripping the exchange article by using the gripping mechanism.

7. The animal breeding system (1) according to claim 6, wherein
the exchange robot (40) is provided inside the animal room (2); and
the instruction unit (81c) instructs the exchange robot (40) to perform an operation of exchanging the exchange article about the cage carried to the certain carrying position.

8. The animal breeding system (1a) according to claim 6, wherein
the exchange robot (40) is provided outside the animal room (2); and
the instruction unit (81c) instructs the exchange robot (40) to perform an operation of exchanging the exchange article about the cage carried into the pass box (70) as the certain carrying position.

9. The animal breeding system (1, 1a) according to any one of claims 6 to 8, wherein the exchange article includes feed, a water supply package, and a sawdust sheet.

10. The animal breeding system (1, 1a) according to any one of claims 1 to 9, wherein the cage includes a disposable cage.

11. An animal breeding method comprising:
carrying a cage for breeding an animal from a rack (10) containing therein the cage to a certain carrying position while retaining the cage with a robot hand provided on a carrier robot (20); and
bringing a camera (27) provided near the robot hand close to the cage in the rack (10) to cause the camera (27) to capture an inside of the cage.

12. The animal breeding method according to claim 11, further comprising:
performing an operation of exchanging an article to be exchanged in breeding the animal by using an exchange robot (40) including a gripping mechanism about the cage carried to the certain carrying position.
